Europäisches Patentamt

European Patent Office

Office européen des brevets

(19)

(11) Veröffentlichungsnummer: **0 108 973**
**B1**

# EUROPÄISCHE PATENTSCHRIFT

(12)

(45) Veröffentlichungstag der Patentschrift:
**07.01.87**

(21) Anmeldenummer: **83110736.2**

(22) Anmeldetag: **27.10.83**

(51) Int. Cl.⁴: **G 01 P 3/66**

(54) **Vorrichtung zur Messung der Anfangsgeschwindigkeit eines aus einer Waffe abgeschossenen Geschosses.**

(30) Priorität: **10.11.82 CH 6533/82**
**20.07.83 CH 3955/83**

(43) Veröffentlichungstag der Anmeldung:
**23.05.84 Patentblatt 84/21**

(45) Bekanntmachung des Hinweises auf die Patenterteilung:
**07.01.87 Patentblatt 87/2**

(84) Benannte Vertragsstaaten:
**CH DE FR GB IT LI SE**

(56) Entgegenhaltungen:
**EP - A - 0 023 365**
**EP - A - 0 035 802**
**BE - A - 449 432**
**DE - A - 2 023 938**
**FR - A - 1 156 907**
**GB - A - 965 077**

(73) Patentinhaber: **Werkzeugmaschinenfabrik Oerlikon-Bührle AG, Birchstrasse 155, CH-8050 Zürich (CH)**

(72) Erfinder: **Ettel, Godwin, Dipl. Phys., Bettackerstrasse 11, CH-8152 Glattbrugg (CH)**
Erfinder: **Mäder, Heinz, Dr. Dipl. El.Ing., Rautiweg 2, CH-8122 Pfaffhausen (CH)**
Erfinder: **Ramseyer, Robert, Dipl.Ing., 23 Chemin J.B.Terray, CH-1290 Versoix (CH)**

## Beschreibung

Die Erfindung betrifft eine Vorrichtung zur Messung der Anfangsgeschwindigkeit $V_0$ eines aus einer Waffe abgeschossenen Geschosses, wobei die Vorrichtung an der Mündung des Waffenrohres befestigt ist und mindestens eine Messspule aufweist, welche derart angeordnet ist, dass die Messspulenachse mit der Waffenrohrachse zusammenfällt und die Vorrichtung zugleich als Mündungsbremse ausgebildet ist, und der Innendurchmesser der Spule so bemessen ist, dass bei der Messung der Anfangsgeschwindigkeit von Treibspiegelgeschosen die Zerlegung des Treibspiegels schon während der Messung stattfinden kann.

Bei einer bekannten Vorrichtung dieser Art (siehe DE-A-2 023 938) ist mindestens eine Spule eines UKW-Oszillators in einem ringförmigen, isolierenden Träger, im Abstand von mindestens einem Kaliber vor der Mündung angeordnet, welche den Geschossweg mit geringem Abstand umgibt und wenige Windungen aufweist. Der UKW-Oszillator befindet sich auf dem Waffenrohr, und die Spule befindet sich in seinem Schwingkreis.

Bei einer anderen bekannten Vorrichtung dieser Art (siehe FR-A-1 156 907) sind zwei Spulen zum Messen der Anfangsgeschwindigkeit eines Gschosses über Stangen in verhältnismässig grosem Abstand miteinander verbunden. Zu ihrer Abschirmung sind diese Stangen von Rohren umgeben, welche vor allem zur Versteifung der Vorrichtung dienen.

Da die erfindungsgemässe Vorrichtung an der Mündung des Waffenrohres den heissen Gasen der Waffe ausgesetzt ist, wird vorzugsweise austenitischer Stahl verwendet, der Korrosions- und hitzebeständig ist (was z.B. bereits aus «Meyer's Enzyklopädisches Lexikon» Band 3: An – Ber, Bibliographisches Institut Mannheim/Wien/Zürich 1971, Seite 142, bekannt ist).

Bei einer weiteren Vorrichtung dieser Art (siehe EP-A-0 035 802) ist eine Hülse vorhanden, welche den gleichen Innendurchmesser wie das Waffenrohr besitzt und deren Aussendurchmesser gleich gross ist wie der Innendurchmesser der Messspulen, welche an beiden Enden der Hülse angeordnet sind. Diese Ausbildung der Messvorrichtung ist vor allem vorteilhaft bei der Messung der Anfangsgeschwindigkeit von Treibspiegelgeschossen, bei denen der Treibspiegel sofort nach Austritt aus der Waffenrohrmündung zerfällt. Durch die erwähnte Hülse wird der Zerfall des Treibspiegels vor der $V_0$-Messvorrichtung verhindert.

Nachteilig bei all den bekannten $V_0$-Messvorrichtungen ist jedoch, dass sie nicht gegenüber dem störenden Erdmagnetfeld abgeschirmt sind.

Die Aufgabe, die mit der vorliegenden Erfindung gelöst werden soll, besteht in der Schaffung einer Vorrichtung zur Messung der Anfangsgeschwindigkeit eines Geschosses, die gegenüber dem Erdmagnetfeld abgeschirmt ist.

Da bei dieser Anordnung die Vorrichtung den Treibladungsgasen ausgesetzt ist, welche aus der Mündung des Waffenrohres austreten und sehr heiss sind, wodurch die Vorrichtung selber heiss wird, ist es zudem notwendig, diese hitzebeständig auszuführen. Ausserdem müssen die Messspulen vor den heissen Treibladungsgasen geschützt werden.

Die Verwendung hitzebeständiger Werkstoffe kann nun dazu führen, dass die Vorrichtung auf störende Magnetfelder, d.h. auf die Schussrichtung, in welcher die Waffe abgeschossen wird, empfindlich ist. Die Messgenauigkeit wird durch solche Magnetfelder beeinträchtigt.

Damit auch die Anfangsgeschwindigkeit von Treibspiegelgeschossen gemessen werden kann, bei denen der Treibspiegel beim Austritt aus dem Waffenrohr zerfällt, sind die Messspulen verhältnismässig nahe an der Waffenrohrmündung befestigt. Dank dieser Anordnung werden die Messspulen nicht durch den zerfallenden Treibspiegel beschädigt.

Je kleiner der Abstand zwischen zwei Messspulen ist, um so genauer muss der zeitliche Abstand zwischen den beiden Induktionssignalen gemessen werden, die beim Durchtritt des Geschosses durch die Messspulen erzeugt werden. Daher wirkt sich das Erdmagnetfeld ungünstig auf die Messung der Anfangsgeschwindigkeit des Geschosses aus.

Ferner ist es notwendig, Messvorrichtung und Mündungsbremse zu einer Einheit zu kombinieren, damit beide möglichst nahe an der Waffenrohrmündung angeordnet werden können.

Zur Lösung der genannten Aufgabe ist die eingangs genannte Vorrichtung erfindungsgemäss dadurch gekennzeichnet,

– dass zur Befestigung der Messspulen an der Waffenrohrmündung Träger aus rohrförmigen Stäben, die aus austenitischem Stahl bestehen, verwendet werden;

– dass zum Abschirmen des Messspulenfeldes vor dem Erdmagnetfeld eine Abschirmung verwendet wird, die aus Weicheisenstäben besteht, die sich im Innern der rohrförmigen Stäbe aus austenitischem Stahl befinden;

– dass die Messspulen sich in Ringen befinden, an denen Prallplatten befestigt sind, welche die aus der Mündung des Waffenrohres austretenden Treibladungsgase umlenken.

Ein Ausführungsbeispiel der erfindungsgemässen Messvorrichtung ist anhand der beigefügten Zeichnung im folgenden ausführlich beschrieben.

Die einzige Figur der Zeichnung zeigt einen Längsschnitt durch eine offene Messbasis. Die offene Messbasis gemäss der vorliegenden Erfindung enthält zwei Induktionsspulen 25 und 26, die denselben Durchmesser besitzen. Diese beiden Induktionsspulen 25 und 26 befinden sich in Umfangsnuten zweier erster Ringe 27 und 28. Die beiden ersten Ringe 27, 28 sind von je einem zweiten Ring 29 und 30 umgeben und in je einem dritten Ring 31 und 32 befestigt. Die beiden dritten Ringe 31 und 32 sind durch eine Anzahl röhrenförmiger Stäbe 33, 34 miteinander verbunden, von denen in der Figur nur vier Stäbe 33, 34 dargestellt sind. Diese Stäbe 33, 34 sind mit ihrem hinteren Ende an einer Hülse 35 befestigt, welche ihrerseits an der Mündung eines Waffenrohres 54 befestigt ist. Zur Befestigung der Hülse 35 an der Mündung des Waffenrohres 54 dienen drei Schrauben 36, die nur im Schnitt dargestellt sind und mit denen die Hülse 35 auf der Mündung des Waffenrohres festgeklemmt wird. An einem der Stäbe 34 ist ein Kabel 37 befestigt. Durch dieses Kabel 37 und durch den röhrenförmigen Stab 34 führen elektrische Leitungen 38, 39 zu den beiden Induktionsspulen 25, 26. An den genannten ersten Ringen 27, 28 sind je eine ringförmige Prallplatte 40 und 41 befestigt. Die aus der Mündung des Waffenrohres austretenden Treibladungsgase werden von diesen Prallplatten 40, 41 umgelenkt, wodurch die hier beschriebene Einrichtung auch als Mündungsbremse wirksam ist und nicht nur zur Messung der Anfangsgeschwindigkeit von Geschossen dient.

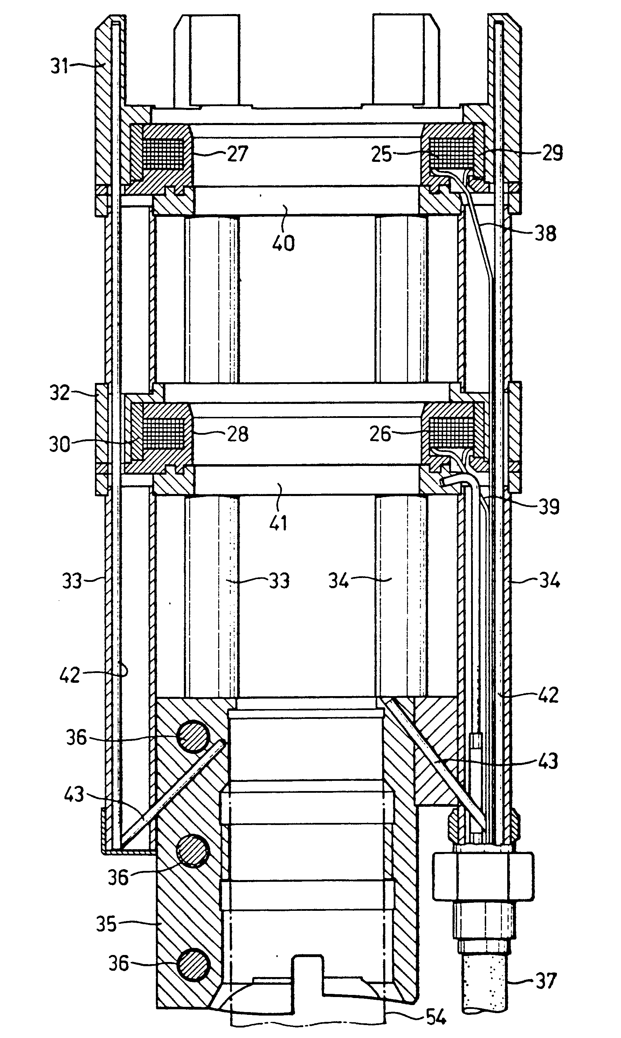

Diese Vorrichtung besteht aus austenitischen Stählen von kleiner magnetischer Permeabilität. Zur Abschirmung des Erdmagnetfeldes sind in die rohrförmigen Stäbe 33, 34 Weicheisenstäbe 42 eingesetzt. Auch die Hülse 35 enthält eine Anzahl Weicheisenstäbe 43, von denen in Fig. 2 nur zwei Stäbe 43 sichtbar sind.

Die Wirkungsweise dieser Vorrichtung zur Messung der Anfangsgeschwindigkeit eines Geschosses kann als bekannt vorausgesetzt werden und sei daher hier nur kurz erläutert. Ein durch die nicht dargestellte Feuerwaffe abgefeuertes Geschoss durchdringt zuerst die hintere Induktionsspule 26 und erzeugt ein erstes Induktionssignal. Anschliessend durchdringt das Geschoss die vordere Induktionsspule 26 und erzeugt ein zweites Induktionssignal. Aus dem Abstand der Induktionsspulen 25, 26 und aus dem zeitlichen Abstand zwischen den beiden Induktionssignalen lässt sich die Geschossgeschwindigkeit an der Mündung des Waffenrohres bestimmen Da die Vorrichtung beim Schiessen heiss wird, ändert sich auch der Abstand zwischen den Induktionsspulen 25, 26. Damit bei der Berechnung der Geschossgeschwindigkeit diese Abstandsänderung berüksichtigt werden kann, wird mit Hilfe des Temperaturmessgerätes die Temperatur gemessen.

Die Anfangsgeschwindigkeit eines Geschosses kann aber auch mit einer einzigen Spule gemessen werden, wenn die Länge des Geschosses bekannt ist und die Zeit gemessen wird, die zwischen Eintritt und Austritt des Geschosses in diese Messspule verstreicht.

## Patentansprüche

1. Vorrichtung zur Messung der Anfangsgeschwindigkei eines aus einer Waffe abgefeuerten Geschosses, wobei die Vorrichtung an der Mündung des Waffenrohres (34) befestigt ist und mindestens eine Messspule (25, 26) aufweist, welche derart angeordnet ist, dass die Messspulenachse mit der Waffenrohrachse zusammenfällt, und die Vorrichtung zugleich als Mündungsbremse ausgebildet ist und der Innendurchmesser der Spule (25, 26) so bemessen ist, dass bei der Messung der Anfangsgeschwindigkeit von Treibspiegelgeschossen die Zerlegung des Treibspiegels schon während der Messung stattfinden kann, dadurch gekennzeichnet,

– dass zur Befestigung der Messspulen (25, 26) an der Waffenrohrmündung Träger aus rohrförmigen Stäben (33, 34), die aus austenitischem Stahl bestehen, verwendet werden;

– dass zum Abschirmen des Messspulenfeldes vor dem Erdmagnetfeld eine Abschirmung (42, 43) verwendet wird, die aus Weicheisenstäben besteht, die sich im Innern der rohrförmigen Stäbe (34, 35) aus austenitischem Stahl befinden;

– dass die Messspulen (25, 26) sich in Ringen (27, 28) befinden, an denen Prallplatten (40, 41) befestigt sind, welche die aus der Mündung des Waffenrohres austretenden Treibladungsgase umlenken.

2. Vorrichtung nach Anspruch 1, dadurch gekennzeichnet, dass die Abschirmung (42, 43) mit dem Waffenrohr verbunden ist.

## Claims

1. An apparatus for measuring the muzzle velocity of a projectile fired out of a weapon which possesses a weapon barrel (54) having a muzzle, having at least one measuring coil (25, 26), the coil axes coinciding with the weapon barrel axis, said apparatus forming a muzzle brake, said at least one measuring coil having an inner diameter, said inner diameter of said measuring coil being dimensioned such that disintegration of a sabot type projectile can occur already during measurement of said muzzle velocity characterised by

– means for mounting said measuring coils (25, 26) on the muzzle of the weapon barrel (54) comprising tubular-shaped rods (33, 34) made of an austenitic type steel;

– magnetic shielding means (42, 43) for shielding interfering terrestrial magnetic field comprising rods made of soft iron located within said tubular-shaped rods (33, 34);

– said measuring coils (25, 26) are arranged in ring members (27, 28); impact plates (40, 41) are secured to said ring members for deflecting propellant gases discharged from said muzzle of said weapon.

2. The apparatus as defined in claim 1, characterised in that the shielding means (42, 43) are connected to the weapon barrel.

## Revendications

1. Dispositif pour mesurer la vitesse initiale d'un obus tiré d'une arme, ce dispositif étant fixé à l'embouchure d'un tube d'arme (54) et comporte au moins une bobine de mesure (25, 26) disposée de façon que l'axe de la bobine de mesure coïncide avec l'axe du tube de l'arme, ce dispositif étant en même temps réalisé comme frein d'embouchure, le diamètre intérieur de la bobine (25, 26) étant dimensionné de façon que lors de la mesure de la vitesse initiale de l'obus à sabot la destruction de celui-ci peut se produire en cours de mesure, caractérisé en ce que:

– pour fixer les bobines de mesure (25, 26) à l'embouchure du tube de l'arme, on a des supports formés de tiges tubulaires (33, 34) en acier austénitique:

– pour protéger le champ des bobines de mesure contre le champ magnétique terrestre, on utilise un écran (42, 43) formé de tiges tubulaires (33, 34) en acier austénitique;

– les bobines de mesure (25, 26) sont logées dans des anneaux (27, 28) auxquels sont fixées des plaques de renvoi (40, 41) qui assurent la déviation des gaz de la charge de propulsion sortant de l'embouchure du tube de l'arme.

2. Dispositif selon la revendication 1, caractérisé en ce que l'écran (42, 43) est relié au tube de l'arme.